# DEMANDE DE BREVET EUROPEEN

(11) **EP 2 006 155 A1**
(43) Date de publication de la demande: **24.12.2008**
(21) Numéro de dépôt: 08158139.9
(22) Date de dépôt: 12.06.2008
(51) Int. Cl.: B60Q 1/26, B60Q 1/56

(54) **Dispositif de fixation inviolable d'une pièce dans une découpe prévue sur une structure**

(30) Priorité: 21.06.2007 FR 0755925
(71) Demandeur: PEUGEOT CITROËN AUTOMOBILES S.A., 78140 Velizy Villacoublay (FR)
(72) Inventeur: Rougetet, Olivier, 92800 Puteaux (FR); Peron, Rodolphe, 95220 Herblay (FR)
(74) Mandataire: Vigand, Régis Louis Michel

(57) **Abrégé**

L'invention concerne un dispositif de fixation inviolable d'une pièce dans une découpe prévue sur une structure (2).

Ce dispositif est caractérisé en ce qu'au moyen de blocage (4) élastique est associé une butée (10) limitant le mouvement de retrait de l'élément (4b) élastique du moyen de blocage (4) vers l'axe de la pièce et que, d'une part, la distance entre la butée (10) et le bord de la découpe lui faisant face doit être supérieure à la largeur la plus grande de l'élément (4b) élastique et, d' autre part, cette distance entre butée (10) et bord de découpe, diminuée de la largeur de l'élément (4b) élastique au niveau de la ligne imaginaire joignant cette butée (10) et ce bord, doit être au moins inférieure à la distance sur laquelle l'ergot d'inviolabilité (3) s'étend sous l'épaisseur de la structure (2).

Applications pour la fixation de pièces automobiles sur la tôle du véhicule, en particulier un éclaireur de plaque ou un répétiteur latéral.

## Description

La présente invention concerne un système d'inviolabilité de l'extérieur pour une pièce après sa fixation dans une structure.
Plus particulièrement, la présente invention concerne une fixation, assurant une inviolabilité de l'extérieur, de pièces rapportées sur la caisse d'un véhicule automobile.
De nombreuses pièces sont rapportées sur la caisse d'un véhicule, notamment sur la tôle ou sur une garniture. Cette opération se fait souvent par mise en oeuvre d'un moyen de blocage élastique, par exemple du type clip ce qui est une opération simple à réaliser avec des efforts de montage faibles lors de la mise en place par l'opérateur afin d'assurer l'ergonomie du poste de montage en ligne.
Si cette opération implique une fixation rapide et simple de la pièce, il est nécessaire, inversement, de garantir une inviolabilité de l'extérieur de la pièce rapportée ce qui impose que la pièce soit démontable de l'extérieur seulement sous des efforts d'arrachement entraînant une destruction complète de la pièce rapportée. Cette exigence est d'une très grande importance quand la pièce est par exemple un éclaireur de plaque arrière du véhicule pour lequel, quand celui-ci est démontée, il est possible d'accéder aux faisceaux électriques commandant l'ouverture de la porte du volet ou du coffre du véhicule. Cette exigence d'inviolabilité impose donc un montage solide de la pièce.
De plus, les exigences d'après vente imposent des efforts de démontage limités qui ne nécessitent pas d'outil spécifique. En regard des exigences d'inviolabilité que doit remplir la fixation de la pièce, il est approprié d'effectuer ce démontage de l'intérieur du véhicule c'est-à-dire en accès indirect.
La plupart des pièces uniquement fixées par, d'une part, un ergot d'inviolabilité et, d'autre part, un moyen de blocage élastique ne permettent pas de remplir ces trois exigences contradictoires, notamment sur les pièces de signalisation telles que le répétiteur latéral ou l'éclairage de la plaque. Comme ces pièces sont généralement munies d'un ergot d'inviolabilité et d'un moyen de blocage élastique sur chacun de leurs côtés latéraux, le débattement du moyen de blocage élastique permet le dégagement de l'ergot d'inviolabilité et ainsi le démontage de la pièce.
Le document EP-A-0 677 426 décrit l'état de la technique le plus proche et on se référera à ce document pour de plus amples informations. Cet état de la technique est repris aux figures 1a et 1b de la présente demande pour respectivement un éclaireur de plaque de police et un répétiteur latéral. Ces deux pièces 1 comprennent un corps central, essentiellement une lampe 5 tournée vers un capot 6 pour l'éclaireur ou une partie translucide 6 pour le répétiteur. Un boîtier 7 enveloppe le corps central et s'étend vers les deux côtés latéraux de la pièce. Les parties latérales supérieures de ce boîtier 7 recouvrent la partie correspondante de la tôle 2 du véhicule formant les bords latéraux d'une découpe prévue pour recevoir la partie inférieure du boîtier 7 et en conséquence celle de l'éclaireur et du répétiteur. Un joint d'étanchéité 8 peut être prévu pour être intercalé entre ces parties supérieures du boîtier 7 et la tôle 2. Le capot 6 ou la partie translucide est fixé sur cette partie haute du boîtier 7. Sur la partie latérale du boîtier 7 destinée à être sensiblement en dessous de la tôle 2 une fois ce boîtier monté dans la découpe, sont prévus d'un côté un ergot 3 et de l'autre un moyen de blocage élastique 4 pour la fixation du boîtier 7 et en conséquence de l'éclaireur ou du répétiteur dans la découpe. Par exemple, un éclaireur de plaque arrière est monté sur la porte arrière d'un véhicule utilitaire ou sur le volet et se situe très près du système de serrure. Lors du montage de la pièce, on incline celle-ci en présentant la face latérale qui comporte l'ergot 3 vers le côté de la découpe où elle doit être en partie logée et l'ergot 3 est introduit en dessous de l'épaisseur de la tôle 2. On réalise ainsi un premier point d'ancrage de la pièce. Ensuite cette pièce est abaissée vers la découpe, le moyen de blocage élastique 4 est mis en contrainte pour pouvoir pénétrer dans la découpe puis est libéré une fois l'épaisseur de la tôle franchie, et se met automatiquement en position de blocage de la pièce dans la découpe prévue dans la tôle du véhicule.
On voit que la première exigence précédemment décrite implique d'avoir un ergot d'inviolabilité relativement court pour l'introduire aisément derrière l'épaisseur de la tôle. En effet, par exemple pour un éclaireur, lors du montage si l'ergot est trop long, il y a interférence de la tôle du véhicule avec le capot de l'éclaireur du côté de ce doigt de maintien ce qui risquerait entre autres de tordre la tôle.
La deuxième exigence impose au contraire d'avoir un ergot relativement long afin de ne pas pouvoir démonter l'éclaireur par l'extérieur du véhicule en appliquant d'abord un effort de contrainte sur le moyen élastique de blocage pour ensuite permettre à l'ergot de sortir de la découpe sous une force d'arrachement n'entraînant pas la destruction de l'éclaireur.

Le problème à la base de la présente invention est de concilier ces deux exigences contradictoires.

C'est pourquoi, la présente invention a pour but de réaliser un système de fixation d'une pièce dans une découpe prévue sur une structure, ce système permettant une mise en place aisée de la pièce dans la découpe de la structure tout en garantissant une inviolabilité de la fixation de la pièce de l'extérieur de la structure et un démontage facile de la pièce par l'intérieur de cette structure.

A cet effet, l'invention a pour objet un dispositif de fixation inviolable d'une pièce dans une découpe prévue sur une structure présentant une épaisseur donnée, une partie de la pièce étant logée dans la découpe, ce dispositif de fixation présentant sur un côté de la partie de la pièce à introduire dans la découpe un moyen de maintien de la pièce dans la structure, ce moyen de maintien présentant un ergot d'inviolabilité se logeant au moins partiellement sous l'épaisseur de la structure formant le bord de la découpe et, sur le côté opposé de la partie de la pièce à introduire dans la découpe, un moyen de blocage élastique, bloquant ladite pièce après son introduction dans la découpe par mouvement d'extension, en s'éloignant par rapport à l'axe de la pièce vers le bord correspondant de l'épaisseur de la structure, d'un élément élastique de ce moyen de blocage, cet élément se trouvant contre l'épaisseur de la structure formant l'autre bord de la découpe quand la pièce est en position fixée dans la découpe, ce dispositif étant caractérisé en ce qu'au moyen de blocage élastique est associée une butée limitant le mouvement de retrait de l'élément élastique du moyen de blocage vers l'axe de la pièce et que, d'une part, la distance entre la butée et le bord de la découpe lui faisant face doit être supérieure à la largeur la plus grande de l'élément élastique et, d'autre part, cette distance entre butée et bord de découpe, diminuée de la largeur de l'élément élastique au niveau de la ligne imaginaire joignant cette butée et ce bord, doit être au moins inférieure à la distance sur laquelle l'ergot d'inviolabilité s'étend sous l'épaisseur de la structure.

Le moyen de maintien présente en outre un doigt de maintien coiffant l'ergot d'inviolabilité, l'épaisseur correspondante de la structure se trouvant en dessus de l'élément et de l'ergot d'inviolabilité quand la pièce est en position fixée dans la découpe de la structure, ce moyen de maintien présentant en coupe une forme en V couché dont la fourche est orientée en direction du bord correspondant de la découpe, la branche inférieure du V du moyen de maintien formant l'ergot d'inviolabilité et la branche supérieure le doigt de maintien, ce dernier étant de longueur inférieure à la longueur de l'ergot d'inviolabilité s'étendant en dessous de l'épaisseur de la structure.
Le moyen de blocage élastique peut être une langue élastique ou une pince en forme de V présentant deux branches dont une libre à son extrémité supérieure et appelée branche libre, les deux branches étant réunies à leur extrémité inférieure, la branche libre de ce V orientée vers la bordure correspondante de la découpe pouvant s'incliner en direction de cette bordure dans le plan de la pince et réalisant ainsi l'élément élastique.
Avantageusement, le moyen de blocage rentre en contact avec l'épaisseur de la structure à la partie supérieure de l'élément élastique, une encoche pouvant y être prévue pour le logement du bord de l'épaisseur de la structure.
Préférentiellement, la partie de la pièce logée dans la découpe de la structure est logée dans un boîtier portant sur sa surface extérieure d'un côté le moyen de maintien et de l'autre côté la première branche du moyen de blocage élastique, la surface de ce boîtier disposée au fond de la découpe ayant une forme sensiblement rectangulaire du côté du moyen de maintien et présentant une inclinaison vers le haut en direction du bord de la structure.
Avantageusement, la butée agit sur la partie supérieure de la branche libre du moyen de blocage et est portée par la partie supérieure de la surface inclinée du boîtier.
Un joint d'étanchéité peut être prévu entre la partie du boîtier se trouvant au dessus de la structure et ladite structure.

L'invention concerne aussi une pièce destinée à être fixée sur un véhicule automobile avec un tel dispositif de fixation. Cette pièce peut consister en un éclaireur de plaque d'immatriculation ou un répétiteur latéral.

L'invention va maintenant être décrite plus en détail mais de façon non limitative en regard des figures annexées, dans lesquelles:
- les figures 1a et 1b sont des vues en coupe respectives d'un éclaireur de plaque et d'un répétiteur latéral en position dans la découpe prévue dans la tôle du véhicule selon l'état de la technique,
- la figure 2 est une vue en coupe d'un éclaireur de plaque au début du montage en position dans la découpe prévue dans la tôle du véhicule selon la présente invention,
- la figure 3 est une vue en coupe d'un éclaireur de plaque à la fin de son opération de montage dans la découpe prévue dans la tôle du véhicule selon la présente invention,
- la figure 4 est une vue en coupe d'un éclaireur de plaque selon la présente invention, lors d'une opération de démontage de cet éclaireur par l'intérieur de la découpe prévue dans la tôle du véhicule,
- la figure 5 est une vue en coupe d'un éclaireur de plaque selon la présente invention, lors d'un essai de démontage non autorisé par arrachement de l'extérieur de cet éclaireur hors de la découpe prévue dans la tôle du véhicule.

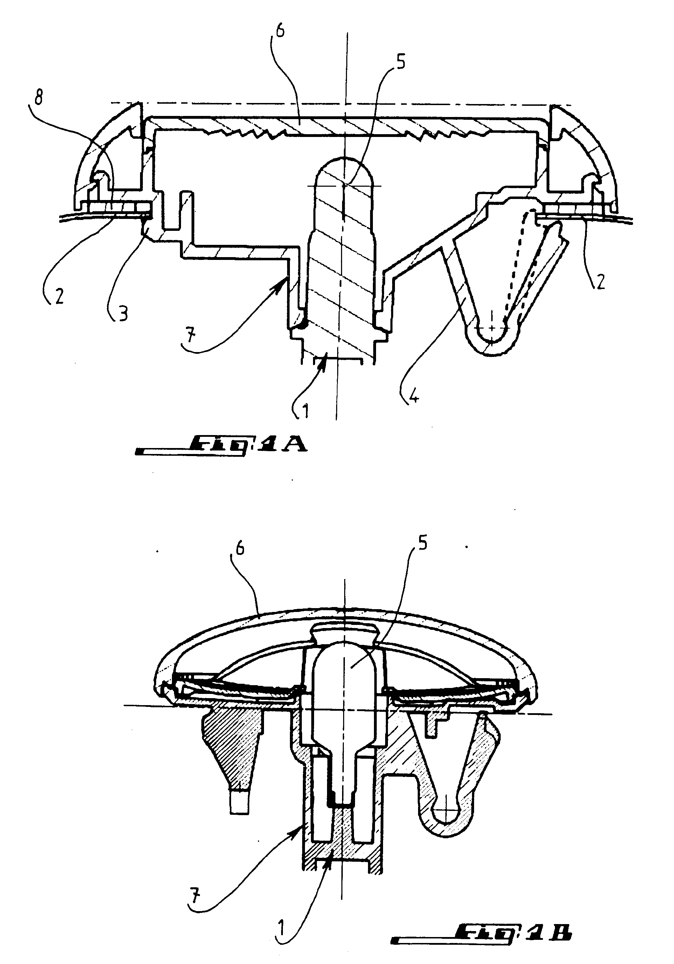

Les figures 1a et 1b montrant l'état de la technique, ont déjà été détaillées dans la partie introductive de la description.

Dans les figures qui vont suivre, la pièce à monter est un éclaireur de plaque d'immatriculation arrière. Il est bien évident que l'invention n'est pas réduite à ce type de pièces mais s'applique aussi à toutes pièces logées au moins partiellement dans une découpe d'une structure quelconque.

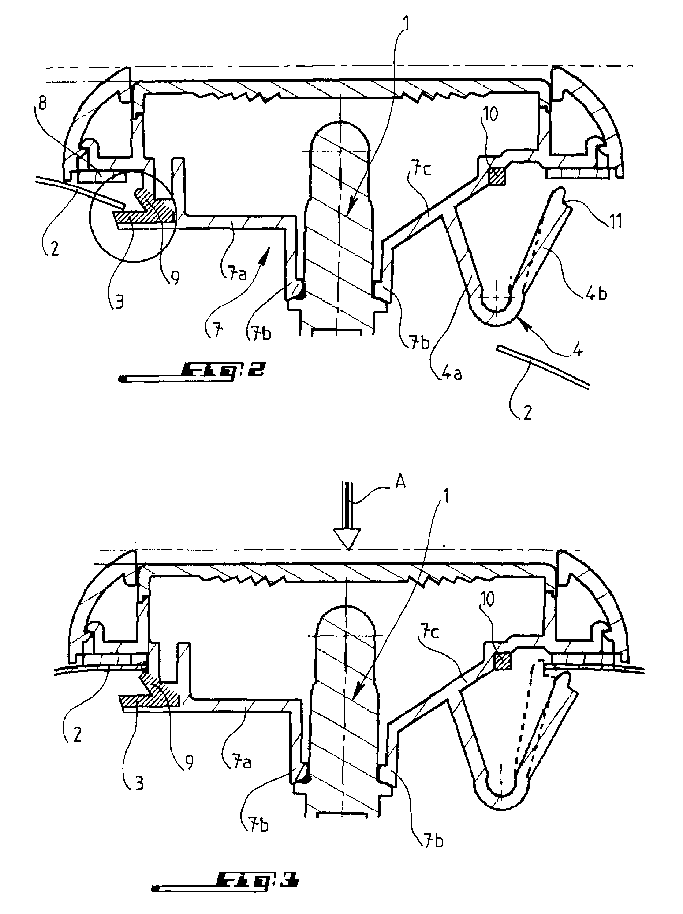

Comme montré sur les figures, l'éclaireur de plaque 1 présente un boîtier 7 avec une partie destinée à être introduite dans la découpe et une partie destinée à rester en dehors de cette découpe et qui recouvre au moins partiellement sur les faces latérales de la découpe le bord de tôle 2 formant la zone de pourtour de ces faces. Un joint d'étanchéité 8 peut être prévu pour être intercalé entre cette partie supérieure de l'éclaireur et la tôle 2. Le capot 6 est fixé sur la partie haute du boîtier 7, par exemple par soudage ou collage. A sa base inférieure, le boîtier 7 présente une partie 7a de forme sensiblement rectangulaire du côté de l'ergot d'inviolabilité 3, cette partie correspondant sensiblement au profil de la découpe. A l'ergot d'inviolabilité 3 est associé un doigt de maintien 9 formant un V couché avec l'ergot d'inviolabilité et dont la fourche est orientée vers le bord correspondant de la découpe, le bord de la tôle 2 étant reçu dans l'écartement du V pendant une première étape du montage puis se retrouvant au dessus de ce doigt de maintien 9 en position montée de l'éclaireur comme montré à la figure 3. Cet ergot d'inviolabilité 3 et le doigt de maintien 9 sont des caractéristiques préférentielles de la présente invention et représentent le premier moyen d'inviolabilité de l'éclaireur.

Le boîtier 7 enveloppe d'autre part une partie du corps de l'éclaireur 1, essentiellement la lampe 5 dans une partie 7b sensiblement cylindrique. De l'autre côté du corps de l'éclaireur 1, la face inférieure du boîtier présente une surface inclinée 7c qui porte le moyen de blocage élastique composé de deux branches 4a et 4b formant un V, la branche 4a étant venue de matière avec la surface inclinée 7c et la branche 4b étant dite libre car présentant son extrémité supérieure libre. Une telle surface 7c permet une liberté de mouvement au dispositif de blocage élastique pendant le montage, la branche libre 4b devant être poussée vers le corps de l'éclaireur lors de son introduction dans la découpe prévue dans la tôle 2 du véhicule. Cette surface inclinée 7c comprend en outre une butée 10 qui est une caractéristique essentielle de la présente invention en réalisant le second moyen d'inviolabilité. La branche libre 4b peut venir en appui contre cette butée 10 quand elle est poussée en position rétractée vers le corps de l'éclaireur. La position de la butée 10 est cruciale: elle doit permettre un mouvement de retrait de la branche 4b suffisant pour permettre l'introduction de l'éclaireur de ce côté de la découpe lors du montage mais doit bloquer, en limitant le mouvement de retrait de la branche 4b, un mouvement de translation de l'éclaireur vers le bord latéral de la découpe en vis-à-vis de la branche 4b dans une opération de démontage de l'extérieur dite opération non autorisée de démontage par arrachement de l'éclaireur comme on le verra par la suite. La branche 4b peut présenter une encoche 11 à son extrémité supérieure pour un meilleur logement du bord de tôle 2 correspondant, comme il est montré en pointillé à la figure 3, ou en alternative la partie supérieure de la surface extérieure de la branche 4b peut être placée sous la tôle 2.
La figure 2 représente une vue en coupe d'un éclaireur de plaque au début du montage en position dans la découpe prévue dans la tôle du véhicule.

Comme déjà énoncé dans la partie introductive de la description, cette opération commence par l'introduction de l'ergot d'inviolabilité 3 sous la tôle 2 formant le bord latéral correspondant de la découpe en inclinant l'éclaireur vers ce bord. La première exigence est à respecter et l'ergot d'inviolabilité 3 ne doit pas être trop long pour permettre une introduction facile sous le bord de la découpe et pour ne pas tordre la tôle à ce niveau. Ensuite, la partie opposée de l'éclaireur comprenant la surface inclinée 7c et le moyen de blocage 4 élastique est abaissée et introduite dans la découpe en exerçant une force dit de montage dans le sens de la flèche A conformément à la figure 3. Lors de son introduction dans la découpe, la branche 4b subit une contrainte de la part du bord de la tôle et se rétracte en direction du corps 1 de l'éclaireur. Ensuite après que la majeure partie de cette branche 4b a passé le bord de la tôle 2, le mouvement naturel élastique d'écartement de la branche 4b par rapport à la branche 4a permet alors à l'extrémité haute de la branche 4b de se retrouver en butée contre le bord de la tôle 2, ce bord étant logé dans l'encoche 11 dans un mode de réalisation, ou bien la branche libre 4b se trouve en dessous de la tôle. Cette mise en contact du bord ou ce positionnement sous ce bord empêche tout mouvement de remontée de l'éclaireur hors de la découpe. La figure 3 montre ainsi l'éclaireur en position montée dans la découpe.

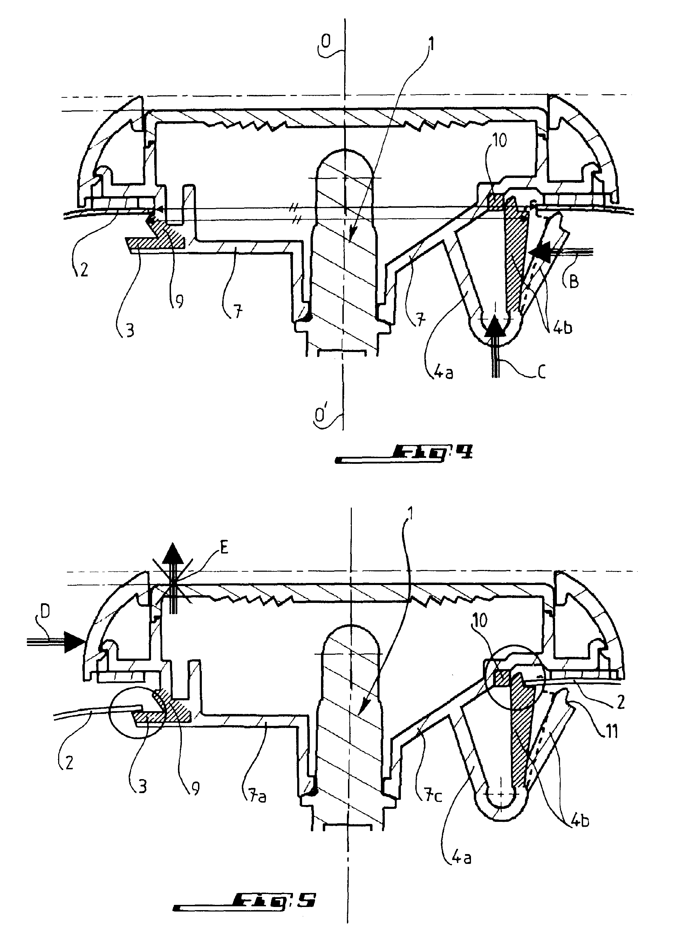

La figure 4 montre une opération de démontage de l'intérieur dite opération de démontage autorisée qui doit selon la deuxième exigence se faire facilement et sans outils spéciaux. Ce démontage est possible manuellement. On exerce tout d'abord une force de déverrouillage B du moyen de blocage orientée vers le centre de l'éclaireur 1 sur la branche 4b du moyen de blocage 4 élastique avec pour conséquence le dégagement de cette branche 4b du contact avec le bord de la tôle 2 ou de la position de sa partie supérieure sous la tôle 2. Ensuite, en appliquant une force de démontage C perpendiculaire à la force de déverrouillage B et parallèle à l'axe central OO' de l'éclaireur, on fait monter la partie du boîtier 7 comprenant la surface inclinée 7c et le moyen de blocage 4 élastique en la faisant sortir hors de la découpe. L'autre partie 7a avec l'ergot d'inviolabilité 3 et le doigt de maintien 9 sera aussi retirée sans difficulté de la découpe, aucun moyen ne s'opposant plus à ce retrait étant donné que l'autre partie de l'éclaireur est déjà retirée de la découpe.

La figure 5 illustre un démontage de l'extérieur dit opération de démontage non autorisée par arrachement de l'éclaireur de plaque. Ce démontage ne doit pas être possible conformément à la troisième exigence sans destruction complète de l'éclaireur de plaque. Un effort de déverrouillage du moyen de blocage 4 dans le sens de la flèche D pour pousser l'éclaireur vers le bord de tôle 2 associé au moyen de blocage 4 élastique sera limité du fait de la mise en butée de la branche 4b contre la butée 10. En calculant l'épaisseur de la butée en conséquence, il sera certes possible au bord de la tôle 2 de passer au dessous du doigt de maintien 9 dans le V formé entre le doigt de maintien 9 et l'ergot d'inviolabilité 3 car le doigt 9 était prévu pour présenter une longueur faible afin de permettre une meilleure introduction lors du montage. Cependant, il sera impossible de faire passer le bord de tôle 2 en dessous de l'ergot d'inviolabilité 3 du fait de la longueur de cet ergot d'inviolabilité 3 associée à la limitation du mouvement de retrait vers le centre de l'éclaireur de la branche 4c obtenue par l'utilisation de la butée 10. Une force d'arrachement selon la flèche E, inférieure à celle qui entraîne la destruction complète de l'éclaireur, ne pourra pas ainsi faire sortir l'éclaireur de la découpe.

En cas de relâchement de l'effort transversal, la même situation que lors du montage de l'éclaireur de plaque sera retrouvée, un effort normal de pression sur l'éclaireur de plaque permettant sa remise en place en position finale de montage.
Ce dispositif permet la réduction du nombre d'éléments à mettre en oeuvre pour la conception de la pièce.
Il permet de supprimer les protections internes d'inviolabilité mises en place du fait du risque d'accessibilité par l'extérieur engendrée par la possibilité d'un démontage non autorisé de la pièce par arrachement de l'éclaireur hors de la découpe de l'extérieur, ce qui n'est plus possible avec l'éclaireur selon l'invention.
Il permet en outre de supprimer les pièces de fixation comme vis ou autres et d'obtenir une fixation rapide et à moindre coût.
La proposition selon la présente invention permet donc un gain de coût, de masse et de nomenclature.

La simplification du nombre de pièces permet un gain sur la gamme de montage qui est réduite au moyen de blocage élastique et aussi un rapide montage de la pièce pour assurer l'ensemble de la fonction.
Le démontage de la pièce, par exemple dans le cas d'une pièce rapportée ayant une fonction d'éclairage afin de changer l'ampoule, se fait sans outil spécial et sans destruction du dispositif d'inviolabilité qui pourra être de ce fait réutilisé.

## Revendications

1. Dispositif de fixation inviolable d'une pièce dans une découpe prévue sur une structure (2) présentant une épaisseur donnée, une partie de la pièce étant logée dans la découpe, ce dispositif de fixation présentant sur un côté de la partie de la pièce à introduire dans la découpe un moyen de maintien (3, 9) de la pièce dans la structure, ce moyen de maintien (3, 9) présentant un ergot d'inviolabilité (3) se logeant au moins partiellement sous l'épaisseur de la structure (2) formant le bord de la découpe et, sur le côté opposé de la partie de la pièce à introduire dans la découpe, un moyen de blocage (4) élastique, bloquant ladite pièce après son introduction dans la découpe par mouvement d'extension, en s'éloignant par rapport à l'axe de la pièce vers le bord correspondant de l'épaisseur de la structure (2), d'un élément (4b) élastique de ce moyen de blocage (4), cet élément (4b) se trouvant contre l'épaisseur de la structure (2) formant l'autre bord de la découpe quand la pièce est en position fixée dans la découpe, ce dispositif étant **caractérisé en ce qu'**au moyen de blocage (4) élastique est associée une butée (10) limitant le mouvement de retrait de l'élément (4b) élastique du moyen de blocage (4) vers l'axe de la pièce et que, d'une part, la distance entre la butée (10) et le bord de la découpe lui faisant face doit être supérieure à la largeur la plus grande de l'élément (4b) élastique et, d'autre part, cette distance entre butée (10) et bord de découpe, diminuée de la largeur de l'élément (4b) élastique au niveau de la ligne imaginaire joignant cette butée (10) et ce bord, doit être au moins inférieure à la distance sur laquelle l'ergot d'inviolabilité (3) s'étend sous l'épaisseur de la structure (2).

2. Dispositif selon la revendication 1, **caractérisé en ce que** le moyen de maintien (3, 9) présente en outre un doigt de maintien (9) coiffant l'ergot d'inviolabilité (3), l'épaisseur correspondante de la structure (2) se trouvant en dessus du doigt de maintien (9) et de l'ergot d'inviolabilité (3) quand la pièce est en position fixée dans la découpe de la structure (2), ce moyen de maintien présentant en coupe une forme en V couché dont la fourche est orientée en direction du bord correspondant de la découpe, la branche inférieure du V du moyen de maintien (3, 9) formant l'ergot d'inviolabilité (3) et la branche supérieure le doigt de maintien (9), ce dernier étant de longueur inférieure à la longueur de l'ergot d'inviolabilité (3) s'étendant en dessous de l'épaisseur de la structure (2).

3. Dispositif selon l'une quelconque des revendications précédentes, **caractérisé en ce que** le moyen de blocage (4b) élastique est une langue élastique ou une pince en forme de V présentant deux branches (4a, 4b) dont une libre à son extrémité supérieure et appelée branche libre, les deux branches étant réunies à leur extrémité inférieure, la branche libre (4b) de ce V orientée vers la bordure correspondante de la découpe pouvant s'incliner en direction de la bordure dans le plan de la pince et réalisant ainsi l'élément élastique.

4. Dispositif selon l'une quelconque des revendications précédentes, **caractérisé en ce que** le moyen de blocage (4) rentre en contact avec l'épaisseur de la structure (2) à la partie supérieure de l'élément (4b) élastique, une encoche (11) pouvant y être prévue pour le logement du bord de l'épaisseur de la structure (2).

5. Dispositif selon la revendication 3,**caractérisé en ce que** la partie de la pièce logée dans la découpe de la structure (2) est logée dans un boîtier (7) portant sur sa surface extérieure d'un côté le moyen de maintien (3, 9) et de l'autre côté la première branche (4a) du moyen de blocage (4) élastique, ce boîtier (7) ayant une forme sensiblement rectangulaire du côté du moyen de maintien (3, 9) et présentant une inclinaison vers le haut en direction du bord de la structure (2).

6. Dispositif selon la revendication 5,**caractérisé en ce que** la butée (10) agit sur la partie supérieure de la branche libre (4b) du moyen de blocage (4) et est portée par la partie supérieure de la surface inclinée (7c) du boîtier (7).

7. Dispositif selon l'une quelconque des revendications 4 ou 5, **caractérisé en ce qu'**un joint d'étanchéité (8) est prévu entre la partie du boîtier (7) se trouvant au dessus de la structure (2) et ladite structure (2).

8. Pièce destinée à être fixée sur un véhicule automobile, **caractérisée en ce qu'**elle présente un dispositif de fixation selon l'une quelconque des revendications précédentes.

9. Pièce selon la revendication précédente, **caractérisé en ce qu'**elle consiste en un éclaireur de plaque d'immatriculation ou un répétiteur latéral.
